# EUROPEAN PATENT SPECIFICATION

(11) **EP 2 170 733 B1**
(45) Date of publication and mention of the grant of the patent: **14.03.2012**
(21) Application number: 08773543.7
(22) Date of filing: 19.06.2008
(51) Int. Cl.: B65D 83/14

(54) **OVERPRESSURE RELIEF DEVICE FOR CLOSED CONTAINERS**
ÜBERDRUCKVENTIL FÜR GESCHLOSSENE BEHÄLTER
DISPOSITIF DE LIBERATION DE SURPRESSION POUR CONTENANTS FERMES

(30) Priority: 21.06.2007 DE 102007029450
(43) Date of publication of application: 07.04.2010
(73) Proprietor: Huber Packaging Group GmbH, 74613 Öhringen (DE)
(72) Inventor: KOLON, Philipp, 74613 Öhringen (DE); WELLER, Jens, 74626 Bretzfeld-Brettach (DE); BALDASSI, Marco, 74629 Pfedelbach (DE); HAEUSSLER, Bernd, 74613 Öhringen (DE); SCHNEIDER, Peter, 74632 Neuenstein (DE)
(74) Representative: Witte, Weller & Partner
(86) International application number: PCT/EP2008/004982
(87) International publication number: WO 2008/155127

(56) References cited:
- FR-A- 2 685 303
- US-A- 3 515 308
- US-A- 3 880 187
- US-A- 5 232 124

## Description

Recently so-called party barrels with filling volumes of, mostly, 5 or 10 liters have come into use, especially for packaging beer. As part of that development, containers equipped with an integrated CO₂ pressure accumulator are presently being developed. Pressure can be produced for example with the aid of a low-pressure cartridge (compare WO-A-2005 095229) or of a high-pressure cartridge (compare EP-A-1 642 862). Such party barrels are designed as three-piece folded-joint cans. The main body comprises a lengthwise welded seam, the bottom and the upper bottom are connected with the main body by a folded joint. Such a container is dimensionally stable and tight up to a specified hydraulic inner pressure. When pressure rises above that point, the container gets deformed and, finally, becomes untight due to opening of the folded joint. This situation my lead to an abrupt pressure release. The use of an internal pressure accumulator entails the risk that in case of uncontrolled gas release due to some malfunction pressure may rise excessively inside the container and as a result bursting of the container may occur or the folded joint may open, as has been mentioned before.

For safety reasons it is, therefore, necessary to provide a pressure release device through which pressure can be released to the outside in the event an unexpected pressure rise should occur, before the folded joint gets overloaded or the container comes to burst.

Such a pressure release device has been known from EP-A-1 688 814.

However, the pressure release device known from that publication has a relatively complicated structure.

Further, there have been known in the art so-called "bursting disks", used for example in machinery and plant engineering. Such a bursting disk comprises a metal plate or a disk of defined thickness serving as a shutoff member in a pressure-loaded system. When the pressure rises above a defined critical value, the bursting disk will break, thereby releasing a flow passage through which the pressurized medium is permitted to escape.

A pressure release device for a closed container according to the preamble of claim 1 is known from FR-A-2 685 303.

Similar pressure release devices are known from US-A-3 515 308 and from US-A-5 232 124.

However, once the known pressure release devices are activated, there is no controlled outflow of a fluid stored in the container.

In view of this it is an object of the invention to disclose an improved pressure release device for a closed container that offers a reliable operation and an easy assembly.

This object is achieved by a pressure release device according to claim 1.

The film may consist, for example, of metal, such as aluminum, or of a plurality of connected layers of metal or of a plastic material, i.e. of a compound film.

According to a further development of the invention, the film is connected with the plug by a sealed layer.

In an alternative embodiment, the substances of the film and of the plug are connected by a molding operation, preferably by a 2K-technique (2-component-technique).

In 2K-technology, two different plastic materials having different properties, for example a harder and a softer material, are joined one with the other by two successive injection molding operations. This leads to an especially intimate connection with high adhesive strength between the two plastic materials.

This guarantees simple fastening on the plug, with reliable sealing effect, for closing the passage opening.

According to a preferred further development of that embodiment, the passage is closed by a flange on which the film is held.

This facilitates the operation of mounting the film on the plug in sealing relationship.

According to the invention, that plug comprises a sleeve made from a harder plastic material, in which the passage opening is formed and on which the film is fastened, the sleeve being enclosed by an outer part made from a softer plastic material.

While the outer part consists of a softer material and permits the plug to be sealingly mounted in the opening of the container, the sleeve made from a harder plastic material provides an advantageous way of fastening the film.

In another variant of the invention, the sleeve may also form a predominant portion of the plug while the outer part encloses the sleeve only in the area intended to be sealingly fitted in the opening of the container.

According to a further variant of the invention, the film is coated with a sealable material, preferably a sealable lacquer.

It is possible in this way to make the coating of the film and the sleeve from a chemically very similar or identical material so that both the film and the sleeve will melt locally in the area of the sealable layer when a suitable energy is applied, for example by heating or by ultrasound, whereby a very intimate and sealing connection is achieved between the film and the sleeve.

According to a still further embodiment of the invention, the sleeve is connected with the outer part by a 2K-technique.

This allows a connection with especially good adhering effect to be achieved between the sleeve and the outer part.

According to an alternative variant of the invention, the sleeve is mechanically fitted in an opening of the outer part.

Provided the sleeve and the outer part are shaped adequately, a reliable connection with good adhesive effect can be ensured between the sleeve and the outer part by such a design as well.

According to a further embodiment of the invention, a point facing the film is provided in the sleeve.

Given the fact that under the action of pressure the film will bend from the interior of the container toward the outside it is possible, by arranging a point of suitable form in a suitable position near the film, to define the pressure at which the film will be opened and, thus, pressure will be released, more precisely than on the basis of the strength of the film only. The overpressure at which the pressure release device will respond can be adjusted with high precision in this way. According to the invention, a protective cover is movably held at the passage opening of the sleeve.

This feature ensures that when the pressure release device responds the content of the container cannot be expelled from the container in the form of a sharp jet. Instead, the content of the container will be permitted to escape only through a gap between the protective cover and the passage opening so that any risks will be avoided.

According to a further embodiment of the invention, the protective cover is sealed relative to an outer surface of the plug in a first closed position.

The inner space of the plug in the area of the passage opening and of the film is thereby protected from external mechanical stresses and contamination.

According to the invention, the protective cover is located on the sleeve for being mechanically locked in the desired position.

This permits easy mounting of the protective cover on the sleeve.

According to an additional feature of the invention, the protective cover has a first stop position in which the protective cover is fixed on the sleeve in such a way that when a defined retaining force is exceeded the protective cover will be released from the first stop position and will be displaced in axial direction to release the passage.

This ensures simple and reliable operation of the click-in cover, for releasing the passage opening to the outside when the film is open.

The protective cover can be fitted in the sleeve from the outside in this case, whereby easy assembly is achieved.

According to further embodiment of the invention, the plug is designed as a closure plug for being tightly inserted into the filling opening of a container.

This allows the plug to be advantageously fastened in the filling opening of the container anyway available. The plug can then be integrated in the plug that is anyway required for closing the filling opening.

It is understood that the features of the invention mentioned above and those yet to be explained below can be used not only in the respective combination indicated, but also in other combinations, without leaving the scope of the invention, as defined in the claims

Further features and advantages of the invention will become apparent from the description that follows of a preferred embodiment, with reference to the drawing. In the drawing:
- Fig. 1: shows a sectional view of a detail of a container with a fitted pressure release device in a closed position; and
- Fig. 2: shows the container with pressure release device according to Fig. 1 in an activated position.

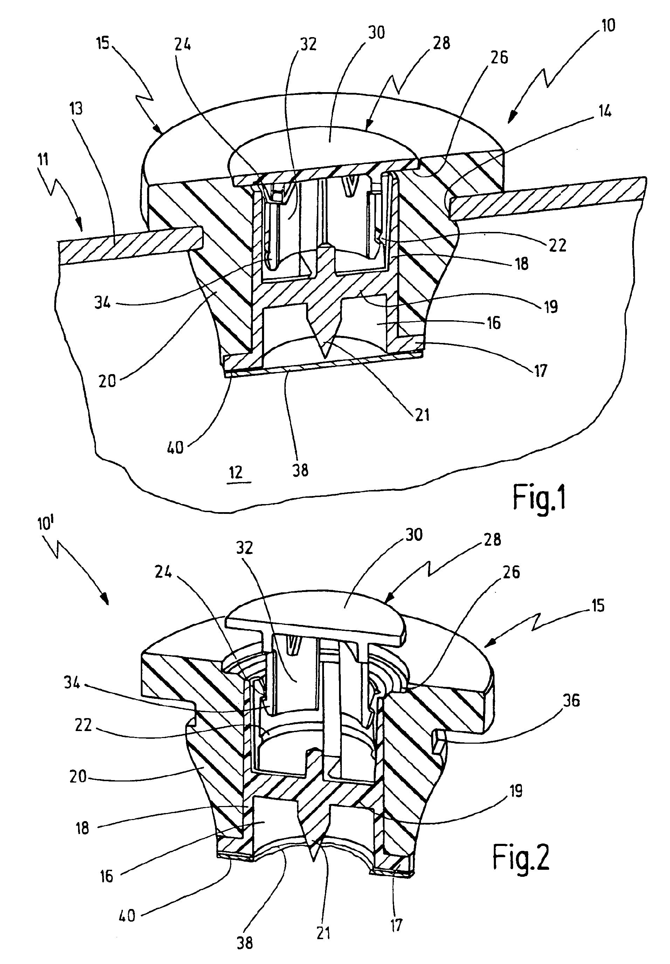

In Fig. 1 a detail of a container is indicated generally by reference numeral 11.

The container 11 may, for example, be a party barrel having a capacity of 5 or 10 liters, being filled with beer, for example. Further, the container 11 is pressurized, preferably by a CO₂ cartridge that is maintained by a control unit at an overpressure suitable for beer of approximately 0.2 to 1 bar (i.e. an absolute pressure of 1.2 to 2 bar), as is basically known from WO-A-2005/095229 or EP-A-1 642 862, for example.

The upper bottom 13 of the container 11 comprises a central opening 14 into which a pressure release device 10 according to the invention is inserted after filling.

The pressure release device 11 comprises a plug 15 having a central sleeve 18 made from a relatively hard plastic material and an outer part 20 made from a relatively soft plastic material which surrounds the sleeve 18. A central passage opening 16 is formed in the sleeve 18.

A circumferential groove 36, by which the outer part 20 can be fitted in the filling opening 14 of the container 11 in sealing engagement, is formed in the outer part 20. The plug 15 can thus be used as a closure plug for the filling opening 14.

In order to guarantee a sealing connection, the outer part 20 consists of a suitable plastic material, for example a thermoplastic elastomer (TPE). Compared with that, the sleeve 18 consists of a harder plastic material, such as PP or PE. The sleeve 18 may be produced jointly with the outer part 20 by a 2K-technique, which ensures an especially intimate mechanical connection between the two parts. Alternatively, the sleeve 18 and the outer part 20 may be produced separately one from the other, and the sleeve 18 can then be mechanically fitted in a suitably configured opening of the outer part 20 so that again a sealing connection is achieved between the two parts.

The sleeve 18 has a hollow-cylindrical design and comprises a flange 17 at its lower end facing the interior of the container 12. A film 38 in the form of an aluminum foil is sealed onto, and is tightly connected with the flange 17 over a circumferential sealing area 40. The film 38 is coated with a material known as "sealable lacquer". The sealable lacquer is plasticized under the influence of heat and/or energy, for example by ultrasonic excitation. Given the fact that the material from which the sleeve 18 is made has similar properties as the sealable lacquer with which the film 18 is coated, the surface of the flange 17 can be plasticized simultaneously as the film 38 is sealed on so that an intimate connection is achieved between the film 38 and the sleeve 18 in the sealing area 40.

Alternatively, the film 38 may be connected with the sleeve 18 also by injection molding.

Now, the thickness of the film 38, its strength and the diameter of the passage opening are mutually adjusted so that when a specified inner pressure is reached in the inner space of the container 12, the film 38 will bend outwardly so that it will come to tear under the effect of the pressure.

In order to ensure the best possible defined response of the pressure release device, a point 21, arranged opposite the film 38, is received on a bridge 19 of the sleeve 18 at a suitable spacing from the film. The spacing between the point 21 and the film 38 is selected to ensure that tearing of the film 38 will occur when a defined overpressure is reached in the space of the container 12, the pressure at which the film will respond and tear being predefinable rather precisely.

In order to prevent pressurized material in the inner space of the container 12 from being expelled from the container through the passage opening 16 in the form of a sharp jet when the pressure release device responds by tearing of the film 38, a protective cover 28 is additionally fixed for axial movement in the passage opening 16. As can be seen in Fig. 1, in a first closed position the cover area 30 of the protective cover 28 comes to lie flush in a recess 26 on the outside of the outer part 20 and is sealed in that position relative to the outer part 20. Both the passage opening 16 and the hollow space above the film 38 are sealed off from the outside in this way. The protective cover 28 is provided for this purpose with a total of four tongues 32 projecting from the bottom of the cover surface 38 in the direction of the interior of the sleeve 18. Stop elements 34 are formed on the lower ends of the tongues 32. In the closed position of the protective cover 28 illustrated in Fig. 1, the stop elements 34 rest against a circumferential inner bead projecting to the inside in the form of a bulge 22. In this way, the protective cover 28 is securely fixed in the closed position.

When the pressure release device 10 responds, i.e. when the film 38 tears, the pressurized material in the container escapes from the inner space 12 and enters the passage opening 16, and the pressure acting on the bottom surface of the cover area 30 causes the stop elements 34 to be released from their engaged position and the protective cover 28 to be displaced in outward direction until the stop elements 34 come into contact with a circumferential engaging edge 24 at the upper end of the sleeve 18. This then constitutes the second stop position illustrated in Fig. 2, where the pressure release device is indicated by reference numeral 10'. The pressurized material in the container can then escape to the outside through the passage opening 16 and the remaining annular gap between the cover surface 30 and the outer part 20.

The engaging edge 24 and the stop elements 34 are adapted one to the other so that for mounting the protective cover 28 it is initially inserted into the sleeve 18 from the outside over the engaging edge 24, for being engaged in the first closed position illustrated in Fig. 1, against the inner bead or the bulge 22. This then constitutes the closed position where the protective cover 28 occupies its first locked position. Further, the stop elements 34 and the engaging edge 24 are adapted one to other so that in the second activated position the stop elements 23 will safely come to rest against the engaging edge 24 and the protective cover 28 will be safely held in the second engaged position or the activated position illustrated in Fig. 2 even when material escapes from the container under pressure.

## Claims

1. A pressure release device for a closed container (11), in particular for a pressurized container for beverages, having a plug (15) which can be sealingly fitted in an opening (14) of the container (11) and which comprises a passage opening (16) sealingly closed by a film (38), wherein the film (38) preferably consists of a metal film, preferably an aluminum film, or preferably comprises a plurality of connected layers consisting of metal and/or a plastic material, and wherein the plug (15) comprises a sleeve (18) made from a harder plastic material, in which the passage opening (16) is formed and on which the film (38) is fas-and wherein tened, the sleeve (18) being enclosed by an outer part (20) made from a plastic material softer than the harder plastic material, a protective cover (28) is movably held in the passage opening (16) of the sleeve (18), **characterized in that** the protective cover (28) being located on the sleeve (18) for being mechanically locked in the desired position, and has a first stop position in which the protective cover (28) is fixed on the sleeve (18) in such a way that when a defined retaining force is exceeded the protective cover (28) will be released from the first stop position and will be displaced in axial direction to release the passage opening (16), wherein the protective cover (28) can be fitted on the sleeve (18) from the outside, and wherein he protective cover (28) is provided with stop elements (34) that permit the protective cover (28) to be inserted into the sleeve (18) from the outside, as well as a stop means (22) for the protective cover (28) in a first position and an axial stop (24) on the sleeve (18) in a second activated position in which the film (38) has been opened and pressurized fluid in the container (11) is permitted to flow from the interior of the container (11) through the passage opening (16) against the protective cover (28) and to the outside.

2. The pressure release device as of 1, **characterized in that** the film (38) is connected with the plug (15) by a sealed layer (40).

3. The pressure release device of any of claims 1 to 2, **characterized in that** the substances of the film (38) and of the plug (15) are connected by a molding operation, preferably by a 2K-technique.

4. The pressure release device of claim 1, **characterized in that** the passage opening (15) is closed by a flange (17) on which the film (38) is held.

5. The pressure release device of any of the preceding claims, **characterized in that** the sleeve (18) is connected with the outer part (20) by a 2K-technique.

6. The pressure release device of 3, **characterized in that** the sleeve (18) is mechanically fitted in an opening of the outer part (20).

7. The pressure release device of any of claims 1 to 6, **characterized in that** the film is coated with a sealable material, preferably a sealable lacquer.

8. The pressure release device of any of claims 5 to 7, **characterized in that** a point (21) facing the film (38) is provided in the sleeve (18).

9. The pressure release device of any of claims 5 to 9, **characterized in that** the protective cover (28) is sealed relative to an outer surface of the plug (15) in a closed position.

10. The pressure release device of any of the preceding claims, **characterized in that** the plug (15) is designed as a closure plug for being sealingly inserted into the filling opening (14) of the container (11).

## Patentansprüche

1. Druckentlastungsvorrichtung für einen geschlossenen Behälter (11), insbesondere für einen unter Druck stehenden Behälter für Getränke, mit einem Stopfen (15), der dichtend in eine Öffnung (14) des Behälters (11) eingepasst werden kann und der eine Durchlassöffnung (16) aufweist, die mittels einer Folie (38) dichtend abgeschlossen ist, wobei die Folie (38) vorzugsweise aus einer Metallfolie, vorzugsweise aus einer Aluminiumfolie besteht oder vorzugsweise eine Mehrzahl von miteinander verbundenen Schichten bestehend aus Metall und/oder einem Kunststoffmaterial aufweist, und wobei der Stopfen (15) eine Hülse (18) aufweist, bestehend aus einem härteren Kunststoffmaterial, in dem die Durchlassöffnung (16) gebildet ist und worauf die Folie (38) befestigt ist, wobei die Hülse (18) von einem äußeren Teil (20) bestehend aus einem Kunststoff, der weicher als das härtere Kunststoffmaterial ist, eingeschlossen ist , **dadurch gekennzeichnet, dass** ein Schutzdeckel (28) beweglich in der Durchlassöffnung (16) der Hülse (18) gehalten ist, dass der Schutzdeckel (28) auf der Hülse (18) zur mechanischen Fixierung an der gewünschten Position angeordnet ist und eine erste Halteposition aufweist, in der der Schutzdeckel (28) auf der Hülse (18) derart fixiert ist, dass dann, wenn eine definierte Haltekraft überschritten wird, der Schutzdeckel (28) von der ersten Halteposition freigegeben wird und in axialer Richtung verschoben wird, um die Durchlassöffnung (16) freizugeben, wobei der Schutzdeckel (28) auf der Hülse (18) von außen aufgesetzt werden kann, und wobei der Schutzdeckel (28) mit Halteelementen (34) versehen ist, die es erlauben, dass der Schutzdeckel (28) in die Hülse (18) von außen eingesetzt wird, wobei ferner ein Haltemittel (22) für den Schutzdeckel (28) in einer ersten Position und ein Axialstopp (24) auf der Hülse (18) in einer zweiten aktivierten Position vorgesehen ist, in der die Folie (38) geöffnet wurde und unter Druck stehendes Fluid in Behälter (11) aus dem Inneren des Behälters (11) durch die Durchlassöffnung (16) gegen den Schutzdeckel (28) und nach außen fließen kann.

2. Druckentlastungsvorrichtung nach Anspruch 1, **dadurch gekennzeichnet, dass** die Folie (38) mit dem Stopfen (15) durch eine abgedichtete Schicht (40) verbunden ist.

3. Druckentlastungsvorrichtung nach irgendeinem der Ansprüche 1-2, **dadurch gekennzeichnet, dass** die Materialien der Folie (38) und des Stopfens (15) mittels eines Gießvorgangs, vorzugsweise durch ein 2K-Verfahren verbunden sind.

4. Druckentlastungsvorrichtung nach Anspruch 1, **dadurch gekennzeichnet, dass** die Durchlassöffnung (15) durch einen Flansch (17) verschlossen ist, worauf die Folie (38) gehalten ist.

5. Druckentlastungsvorrichtung nach irgendeinem der vorhergehenden Ansprüchen, **dadurch gekennzeichnet, dass** die Hülse (18) mit dem Außenteil (20) mittels eines 2K-Verfahrens verbunden ist.

6. Vorrichtung nach Anspruch 3, **dadurch gekennzeichnet, dass** die Hülse (18) mechanisch in eine Öffnung des äußeren Teils (20) eingepasst ist.

7. Druckentlastungsvorrichtung nach irgendeinem der Ansprüche 1-6, **dadurch gekennzeichnet, dass** die Folie mit einem Dichtmaterial, vorzugsweise mit einem Dichtlack, beschichtet ist.

8. Druckentlastungsvorrichtung nach irgendeinem der Ansprüche 5-7, **dadurch gekennzeichnet, dass** auf der Hülse (18) eine Spitze (21) vorgesehen ist, die der Folie (38) zugewandt ist.

9. Druckentlastungsvorrichtung, nach irgendeinem der Ansprüche 5-9, **dadurch gekennzeichnet, dass** der Schutzdeckel (28) in Bezug auf eine Außenfläche des Stopfens (15) in einer geschlossenen Position abgedichtet ist.

10. Druckentlastungsvorrichtung nach irgendeinem der vorhergehenden Ansprüche, **dadurch gekennzeichnet, dass** der Stopfen (15) als ein Verschluss-Stopfen ausgebildet ist, der dichtend in die Füllöffnung (14) des Behälters (11) eingeführt ist.

## Revendications

1. Dispositif de libération de pression pour un réservoir fermé (11), en particulier pour un réservoir pressurisé pour des boissons, comprenant un bouchon (15) qui peut être fixé de façon étanche dans une ouverture (14) du réservoir (11) et qui comprend une ouverture de passage (16) fermée de façon étanche par un film (38), dans lequel le film (38) se compose de préférence d'un film métallique, de préférence d'un film d'aluminium, ou qui comprend de préférence une pluralité de couches assemblées composées de métal et/ou d'une matière plastique, et dans lequel le bouchon (15) comprend un manchon (18) réalisé en une matière plastique plus dure, dans lequel l'ouverture de passage (16) est formée et sur lequel le film (38) est fixé, le manchon (18) étant entouré par une pièce extérieure (20) réalisée en une matière plastique plus souple que la matière plastique plus dure, **caractérisé en ce qu'**un couvercle de protection (28) est maintenu de façon mobile dans l'ouverture de passage (16) du manchon (18), le couvercle de protection (28) étant situé sur le manchon (18) pour être bloqué mécaniquement dans la position désirée et présentant une première position d'arrêt dans laquelle le couvercle de protection (28) est fixé sur le manchon (18) de telle manière que, lorsqu'une force de retenue définie est dépassée, le couvercle de protection (28) soit dégagé de la première position d'arrêt et soit déplacé en direction axiale pour libérer l'ouverture de passage (16), dans lequel le couvercle de protection (28) peut être ajusté sur le manchon (18) à partir de l'extérieur, et dans lequel le couvercle de protection (28) est muni d'éléments d'arrêt (34) qui permettent d'insérer le couvercle de protection (28) dans le manchon (18) à partir de l'extérieur, ainsi que d'un moyen d'arrêt (22) pour le couvercle de protection (28) dans une première position et un arrêt axial (24) sur le manchon (18) dans une deuxième position activée dans laquelle le film (38) a été ouvert et un fluide sous pression se trouvant dans le réservoir (11) est autorisé à s'écouler depuis l'intérieur du réservoir (11) à travers l'ouverture de passage (16) contre le couvercle de protection (28) et vers l'extérieur.

2. Dispositif de libération de pression selon la revendication 1, **caractérisé en ce que** le film (38) est assemblé au bouchon (15) par une couche étanche (40).

3. Dispositif de libération de pression selon l'une quelconque des revendications 1 à 2, **caractérisé en ce que** les substances du film (38) et du bouchon (15) sont assemblées par une opération de moulage, de préférence par une technique 2K.

4. Dispositif de libération de pression selon la revendication 1, **caractérisé en ce que** l'ouverture de passage (15) est fermée par une bride (17) sur laquelle le film (38) est maintenu.

5. Dispositif de libération de pression selon l'une quelconque des revendications précédentes, **caractérisé en ce que** le manchon (18) est assemblé à la pièce extérieure (20) par une technique 2K.

6. Dispositif de libération de pression selon la revendication 3, **caractérisé en ce que** le manchon (18) est ajusté mécaniquement dans une ouverture de la pièce extérieure (20).

7. Dispositif de libération de pression selon l'une quelconque des revendications 1 à 6, **caractérisé en ce que** le film est revêtu d'un matériau d'étanchéité, de préférence d'une laque d'étanchéité.

8. Dispositif de libération de pression selon l'une quelconque des revendications 5 à 7, **caractérisé en ce qu'**une pointe (21) faisant face au film (38) est prévue dans le manchon (18).

9. Dispositif de libération de pression selon l'une quelconque des revendications 5 à 8, **caractérisé en ce que** le couvercle de protection (28) est étanche par rapport à une surface extérieure du bouchon (15) dans une position fermée.

10. Dispositif de libération de pression selon l'une quelconque des revendications précédentes, **caractérisé en ce que** le bouchon (15) est conçu comme un bouchon de fermeture destiné à être inséré de façon étanche dans l'ouverture de remplissage (14) du réservoir (11).
